# EUROPEAN PATENT APPLICATION

(11) **EP 1 686 724 A2**
(43) Date of publication of application: **02.08.2006**
(21) Application number: 05026021.5
(22) Date of filing: 29.11.2005
(51) Int. Cl.: H04L 12/24

(54) **In-band access of management registers**

(30) Priority: 31.01.2005 US 46238
(71) Applicant: Broadcom Corporation, Irvine, CA 92618-7013 (US)
(72) Inventor: Baumer, Howard, 92653 Laguna Hills CA (US); Irwin, John F., 92887 Yorba Linda CA (US)
(74) Representative: Jehle, Volker Armin

(57) **Abstract**

A local link partner accesses in-band the management registers of a remote link partner. The local link partner generates and transmits a management message formatted according to a predefined communication protocol, under the direction of a network management system. The management message is generated according to a message template reserved by the predefined protocol for customization. The management message is transmitted in-band from the local link partner to the remote link partner. The management message can be transmitted when the local link partner is in an active mode or in an idle mode, as defined by the predefined communication protocol. The management message contains a first portion that identifies itself as a message reserved by the predefined protocol for customization. A second portion of the management message contains a management command. The remote link partner performs the management command, which can be a register read or write.

## Description

### Background of the Invention

### Field of the Invention

The present invention generally relates to the management of communication networks. More specifically, the present invention focuses on the in-band access of the management registers of a remote link partner by a local link partner.

### Background Art

Link partners communicate with each other over a common communication link. Specifically, link partners share a physical connection and operate according to a predefined communication protocol.

A network management system is often used to establish and maintain the communication link between link partners. To do so, the network management system manages and controls each link partner individually. Many communication protocols require a direct physical connection from the network management system to each link partner to facilitate network management. Such a requirement becomes impractical as a communication network evolves and grows.

Alternatively, some communication protocols provide for the exchange of management information between a local link partner that is connected to the network management system and a remote link partner that is not connected to the network management system. The local link partner operates under the guidance of the network management system to foster the management of remote link partners. The ability of the remote link partner and local link partner to exchange management information, however, is typically restricted to system startup or else requires the deactivation of the communication link shared by the link partners. Restricting the exchange of management information between link partners to startup does not provide a robust management solution. Further, requiring the deactivation of a valid data link between link partners to accommodate the exchange of management information is time-consuming and inefficient.

Accordingly, a need exists for a mechanism that enables link partners to exchange management information without disrupting the exchange of data information that is not restricted to an initialization period.

### Brief Summary of the Invention

In one aspect, the present invention is directed to a method of a local link partner accessing in-band the management registers of a remote link partner. The local link partner generates and transmits a management message formatted according to a predefined communication protocol. The local link partner generates and transmits the management message under the direction of a network management system that is directly connected to the local link partner. The management message is generated according to a message template reserved by the predefined protocol for customization. The management message is transmitted in-band from the local link partner to the remote link partner. The management message can be transmitted when the local link partner is in an active mode or in an idle mode, as defined by the predefined communication protocol. The management message contains a first portion that identifies itself as a message reserved by the predefined protocol for customization. A second portion of the management message contains a management command. The management message is received by a remote link partner which performs the management command communicated by the management message. The management command can be, but is not limited to, a read from or write to the management registers of the remote link partner.
According to an aspect of the invention, in a communication network operating according to a predefined protocol, a method of accessing in-band a management register of a remote link partner is provided, comprising:
generating a management message formatted according to the predefined protocol;
transmitting the management message in-band from a local link partner to the remote link partner; and
performing a management command communicated by the management message at the remote link partner.
Advantageously, the performing step further comprises writing to the management register of the remote link partner.
Advantageously, the performing step further comprises reading from the management register of the remote link partner.
Advantageously, the performing step further comprises transmitting in-band contents of the management register from the remote link partner to the local link partner.
Advantageously, the generating step further comprises generating the management message at the local link partner under the direction of a network management system.
Advantageously, the network management system is connected to the local link partner.
Advantageously, the generating step further comprises generating the management message according to a message template reserved by the predefined protocol for customization.
Advantageously, the generating step further comprises generating the management message to comprise a first portion that designates the management message as being a message reserved by the predefined protocol for customization and a second portion that contains the management command.
Advantageously, the management command contains a deliberate error.
Advantageously, the transmitting step further comprises transmitting the management command when the local link partner is in an idle mode, as defined by the predefined protocol.
Advantageously, the transmitting step further comprises transmitting the management message when the local link partner is in an active mode, as defined by the predefined protocol.
Advantageously, the transmitting step further comprises transmitting the management message through an intermediate link partner, wherein the intermediate link partner is connected between the local link partner and the remote link partner.
According to an aspect of the invention, a communication network operating according to a predefined protocol that provides in-band access to management registers is provided, comprising:
a local link partner that generates and transmits in-band a management message formatted according to the predefined protocol; and
a remote link partner connected to the local link partner that receives the management message.
Advantageously, the communication network further comprises a network management system that instructs the local link partner to generate and transmit the management message.
Advantageously, the local link partner transmits the management message when the local link partner is in an idle mode, as defined by the predefined protocol.
Advantageously, the local link partner transmits the management message when the local link partner is in an active mode, as defined by the predefined protocol.
Advantageously, the management message is generated according a message template reserved by the predefined protocol for customization.
Advantageously, the management message comprises a first portion that designates the management message as being a message reserved by the predefined protocol for customization and a second portion that contains a management command.
Advantageously, the management command comprises an instruction to read from a management register of the remote link partner.
Advantageously, the management command comprises an instruction to write to the management register of the remote link partner.
Advantageously, the management command comprises a deliberate error.
Advantageously, the remote link partner performs the management command communicated by the local link partner.
Advantageously, performing the management command comprises the remote link partner transmitting in-band contents of the management register to the local link partner.
Advantageously, performing the management command comprises placing the remote link partner into a loop-back mode.
Advantageously, performing the management command comprises setting an equalization level of the remote link partner.
Advantageously, performing the management command comprises instructing the remote link partner to provide the local link partner with link integrity information.
Advantageously, performing the management command comprises providing interconnectivity information to the remote link partner.
Advantageously, performing the management command comprises placing the remote link partner into a test mode.
Advantageously, the predefined protocol is a packet-based protocol.
Advantageously, the local link partner and the remote link partner are connected by coaxial cable.
Advantageously, the local link partner and the remote link partner are connected by Ethernet cable.
Advantageously, the local link partner and the remote link partner are connected by FireWire.
Advantageously, the local link partner and the remote link partner are connected by optical fiber.
Advantageously, the local link partner and the remote link partner are connected by a backplane.
Advantageously, the management message is transmitted through an intermediate link partner, wherein the intermediate link partner is connected between the local link partner and the remote link partner.

### Brief Description of the Drawings/Figures

The accompanying drawings illustrate the present invention and, together with the description, further serve to explain the principles of the invention and to enable one skilled in the pertinent art to make and use the invention.

FIG. 1 illustrates an exemplary communication network.

FIG. 2 illustrates general components of a link partner.

FIG. 3 illustrates a communication network in which a local link partner can obtain in-band access to a management register of a remote link partner.

FIG. 4 illustrates a customized management message formatted according to a predefined protocol.

FIG. 5 provides a flowchart of a method for a local link partner to obtain in-band access to a management register of a remote link partner.

### Detailed Description of the Invention

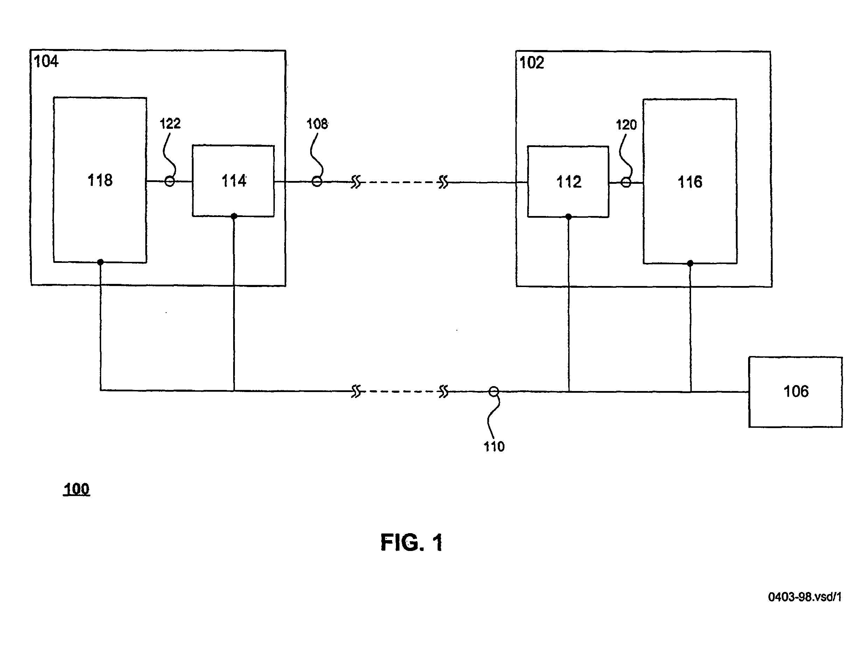

FIG. 1 illustrates an exemplary communication network 100. As depicted, the communication network 100 contains a link partner 102 and a link partner 104. The communication network 100 also contains a network management system 106. Often, the network management system 106 is a dedicated microprocessor. The link partner 102 is connected to the link partner 104 by a communication link 108. The network management system 106 is connected to the link partner 102 and the link partner 104 by a management link 110. Typically, the communication link 108 supports a bidirectional exchange of information. The communication link 108 and the management link 110 can be, but are not limited to, coaxial cable, Ethernet cable, FireWire cable, optical fiber, or a backplane.

Primarily, the link partner 102 and the link partner 104 exchange data information over the communication link 108. The network management system 106 oversees the interaction of the link partner 102 and the link partner 104 and the communication link 108. Specifically, the network management system 106 is responsible for managing and adjusting communication or traffic flow between the link partner 102 and the link partner 104. This is accomplished by exchanging management information between the network management system 106 and the link partner 102 and the link partner 104 over the management link 110.

To facilitate communication, the link partner 102 contains a link interface device 112 and a controller 116 connected by a link 120. Likewise, the link partner 104 contains a link interface device 114 and a controller 118 connected by a link 122. For purposes of this description, the devices depicted within the link partner 102 and the link partner 104 have been simplified for clarity. In an embodiment, the link partner 102 and the link partner 104 may contain several additional devices to facilitate communication and interaction with other network elements connected to the communication network 100.

The link interface device 112 and the link interface device 114 transmit and receive data messages over the communication link 108. Closely tied to the communication link 108, the link interface device 112 and the link interface device 114 may include physical layer devices. The controller 116 and the controller 118 manage the transmission and reception of messages from the link interface devices 112 and 114, respectively. The controller 116 provides a gateway from the link interface device 112 to higher level devices contained within the link partner 102. Likewise, the controller 118 provides a gateway from the link interface device 114 to higher level devices contained within the link partner 104.

The communication network 100 operates according to a predefined protocol which fosters communication between the link partner 102 and the link partner 104. The predefined protocol also enables the network management system 106 to manage and adjust the operation of the link partner 102 and the link partner 104. Consequently, the network management system 106 can effectively manage or control the communication link 108. Typically, a predefined protocol that fosters high-speed communication between the link partner 102 and the link partner 104 over the communication link 108 is desired. For example, the communication network 100 may be governed by, but is not limited to, such predefined protocols as IEEE 802.3ae, PCIE (Protocol Control Information Express), FCP (Fiber Channel Protocol), InfiniBand, IEEE 802.3z, or any other suitable IEEE 802.x protocol.

Since predefined protocols are often associated to a particular physical medium, implementation of a specific predefined protocol will typically dictate the physical connection used for the communication link 108 and the management link 110. Adopting a specific predefined protocol will also typically determine the devices contained within the link partner 102 and the link partner 104. For example, in an embodiment in which the communication network 100 is operating according to predefined protocol IEEE 802.3ae, the link interface device 112 and the link interface device 114 can be Physical Line Interfaces (PHYs) and the controller 116 and the controller 118 can be Media Access Controllers (MACs). Further, in such an embodiment, the link partner 102 and the link partner 104 can be, but are not limited to, switches, routers or line cards within a backplane.

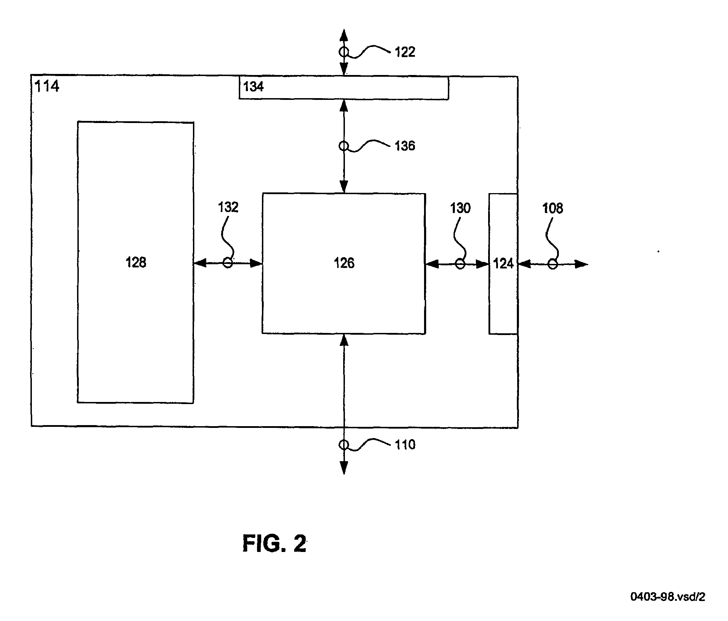

FIG. 2 depicts some of the internal components of the link interface device 114. For purposes of this invention, the devices depicted within the link interface device 114 have been simplified for clarity. As shown, the link interface device 114 contains an input/output (I/O) interface 124. The I/O interface 124 interacts with the communication link 108. The link interface device 114 also contains a link interface controller 126 and a management register bank 128. The link interface controller 126 is connected to the I/O interface 124 by a link 130 and is connected to the management register bank 128 by a link 132. An I/O interface 134 interacts with the link 122 and is connected to the link interface controller 126 by a link 136. The link interface controller 126 is also connected to the network management system 106 by the management link 110.

The link interface controller 126 has the ability to access the contents of the management registers contained within the management register bank 128. Specifically, the link interface controller 126 has the ability to read from and write to the management registers contained within the management register bank 128. The ability to read from the contents of the management registers contained within the management register bank 128 enables the link interface controller 126 to access link diagnostic information. In turn, this allows the link interface controller 126 to perform a link quality assessment, which can be used to improve link performance. The ability to write over the contents of the management registers contained within the management register bank 128 enables the link interface controller 126 to select various operational modes or initiate various test modes of the link interface device 114.

For example, a write over command issued to the management registers contained within the management register bank 128 can be used to ensure the link interface device 114 sends back all of the data it receives from the link partner 102 over the communication link 108. This loop-back command accommodates the testing of the communication link 108 for transmission and reception problems. Furthermore, the ability to read the contents of the management registers contained within the management register bank 128 enables the link interface controller 126 to track performance data stored within the management registers. In effect, access to the management registers contained within the management register bank 128 provides the ability to manage, control, and debug problems with the link partner 104 and the communication link 108.

The ability to manage and control the link interface device 114 by the link interface controller 126 can be transferred to the network management system 106 by using the management link 110. That is, the management link 110 provides the network management system 106 with remote access to the contents of the management registers contained within the management register bank 128. The network management system 106 has the ability to effectively maintain and adjust the operation of the link interface device 114 through the issuance of management messages containing management commands. A similar ability to effectively maintain and adjust the operation of the link interface device 112 is also obtained through the use of the management link 110. Consequently, the network management system 106 has the ability to mange and control the link partner 102 and the link partner 104 and therefore communication network 100.

FIG. 1 illustrates the management of each link partner in the communication network 100 by using a direct physical connection from the network management system 106 to each link partner. Due to design constraints, however, it is often not practical to structure the architecture of the communication network 100 so that each link partner is directly connected to the network management system 106 through the management link 110. At best, the network management system 106 may have a direct physical connection to each link partner when the communication link 108 is first established. After initialization, and as the communication network 100 evolves and grows, it is rarely possible to maintain and rely on this level of connectivity.

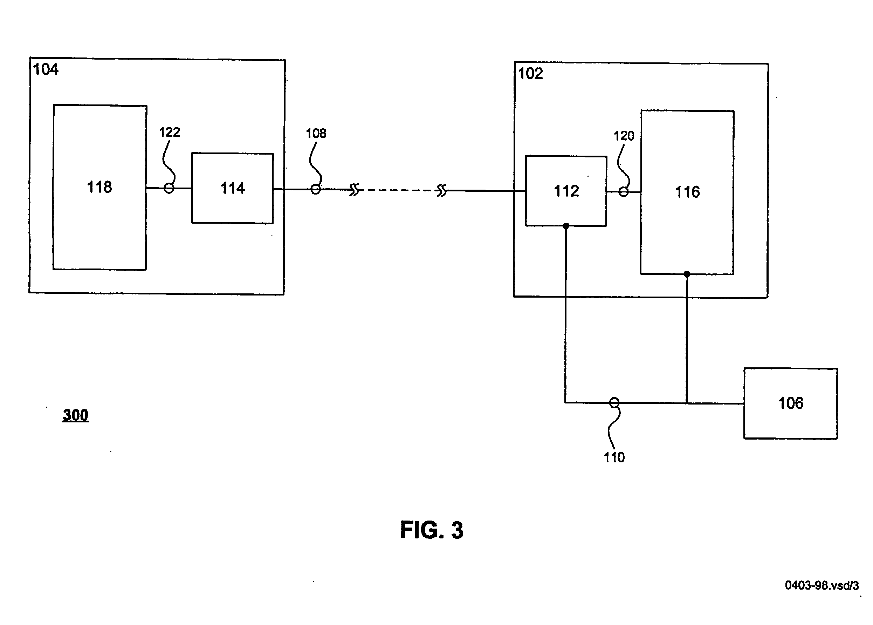

FIG. 3 illustrates a communication network 300 in which the network management system 106 does not have a direct physical connection to each link partner. Consequently, the network management system 106 does not have direct access to the contents of the management registers contained within the management register bank 128. FIG. 3 shows the network management system 106 as being directly connected to the link partner 102 over the management link 110 but not directly connected to the link partner 104. The network management system 106, as depicted in the communication network 300, must therefore communicate indirectly with the link partner 104. That is, the network management system 106 uses the link partner 102 to transport management messages from the network management system 106 to the link partner 104.

In the network arrangement depicted in FIG. 3, the link partner 102 is considered a local link partner since it is connected directly to the network management system 106. The link partner 104, on the other hand, is considered a remote link partner since it is not connected directly to the network management system 106. This arrangement requires the network management system 106 to rely on the link partner 102 to exchange management information with the link partner 104 in order to achieve effective management of the communication network 300. To do so, the link partner 102 must be capable of accessing the contents of the management registers contained within the management register bank 128, or the interface 114.

Other remote link partners (not shown in FIG. 3) may be connected to the communication link 108 or may be connected between link partner 102 and link partner 104. Such a situation often occurs with line cards distributed across the backplane of a larger network device. To effectively manage these additional remote link partners and therefore the entire communication network 300, link partner 102 must be able to access the management registers within each added remote link partner.

The communication network 100 depicted in FIG. 1 presents an ideal network arrangement in that the network management system 106 is directly connected to each link partner. Data communication over the communication link 108 does not need to be disrupted in order to manage the link partner 102 and the link partner 104. FIG. 3, alternatively, presents a more typical network arrangement. The communication network 300 requires the use of the communication link 108 to carry data and management information in order to manage the link partner 102 and the link partner 104.

Typically, a communication protocol will reserve a portion of the communication link 108 for the exchange of data information. This reserved portion is specified in either frequency or time, or both. Management information exchanged over this same reserved portion of the communication link is considered in-band with respect to the data information. That is, management information is considered to be in-band when the management information is exchanged between link partners at the same time and over the same frequency channel as the data information. Alternatively, management information exchanged over a different portion of the communication link 108 is considered out-of-band with respect to the data information. Therefore, out-of-band management information is exchanged between link partners either at a different time or over a different frequency channel as the data information.

A first way that communication protocols may provide for the exchange of management information between link partners is through the exchange of management information at startup. Specifically, network management between link partners may be achieved at startup or initialization by employing auto-negotiation routines. For example, the IEEE (Institute of Electrical and Electronics Engineers) 802.3 protocol, Clause 28, specifies the execution of an auto-negotiation routine when the communication link 108 between link partner 102 and link partner 104 is first established. This auto-negotiation routine, however, is restricted to startup. Once the communication link 108 is established and verified, the auto-negotiation routine no longer provides a mechanism for the exchange of control or management information between link partners. The Clause 28 auto-negotiation routine, therefore, is an out-of-band management protocol since it does not accommodate the simultaneous transfer of data and management information between link partner 102 and link partner 104. Consequently, the Clause 28 auto-negotiation routine does not provide in-band management of remote link partners by local link partners.

The ability of the network management system 106 to manage the remote link partner 104 after startup and to effectively debug problems with the communication link 108 is therefore not possible when the link partners are exchanging data information. Furthermore, after startup, additional remote link partners may be added to the communication network 300 without ever interacting with the network management system 106.

A second way that communication protocols may provide for the exchange of management information between link partner 102 and link partner 104 is by bringing the communication link 108 down. Once the communication link 108 is no longer operating to exchange data information, an out-of-band management mechanism can be employed. Many communication networks operate according to predefined protocols that allow the communication link 108 or link partner 102 and link partner 104 to be deactivated or brought-down in order to perform management operations. For example, Clause 28 of the IEEE 802.3 standard can be employed for this purpose. The Clause 28 method requires the communication link 108 to be deactivated before management functions can be exchanged between the remote link partner 104 and the network management system 106 via the local link partner 102. Though the out-of-band protocol does provide a management mechanism, the mechanism is time-consuming and disrupts the exchange of data information.

The present invention provides for the exchange of management information between link partner 102 and link partner 104 without disrupting the exchange of data information. The present invention enables the exchange of data information between link partner 102 and link partner 104 that is neither restricted to startup nor requires the deactivation of the communication link 108. The present invention therefore allows the network management system 106 to effectively manage communication network 300 without requiring a direct physical connection to each link partner. Specifically, the present invention provides an in-band signaling system which fosters the exchange of management information over the same frequency channel and at the same time as the exchange of data information. To do so, the in-band signaling mechanism provides access to the management registers of the remote link partner 104 by a local link partner 102. In-band access to the management registers of the remote link partner 104 by a local link partner 102 enables the network management system 106 to effectively manage and control the remote link partner 104. Consequently, the communication link 108 between the local link partner 102 and remote link partner 104 can be monitored and managed while simultaneously exchanging data information in accordance with the predefined communication protocol. The present invention therefore obviates the need for an out-of-band management system that either requires the disruption of data communication over the communication link 108 link or is restricted to startup.

The present invention provides in-band access to the management registers of the remote link partner 104 by using a message template reserved by the predefined communication protocol for customization. Specifically, the present invention is directed to the creation of a set of remote link partner management register access commands that can be defined or adapted from a set of reserved control words allocated by the predefined protocol. By definition, these reserved control words can be transmitted simultaneously with data information or in lieu of data information. In this way, the network management system 106 can use the local link partner 104 to vicariously issue management commands to the remote link partner 104. The commands can be issued when the local link partner 102 is in an active mode or in an idle mode, as defined by the predefined protocol.

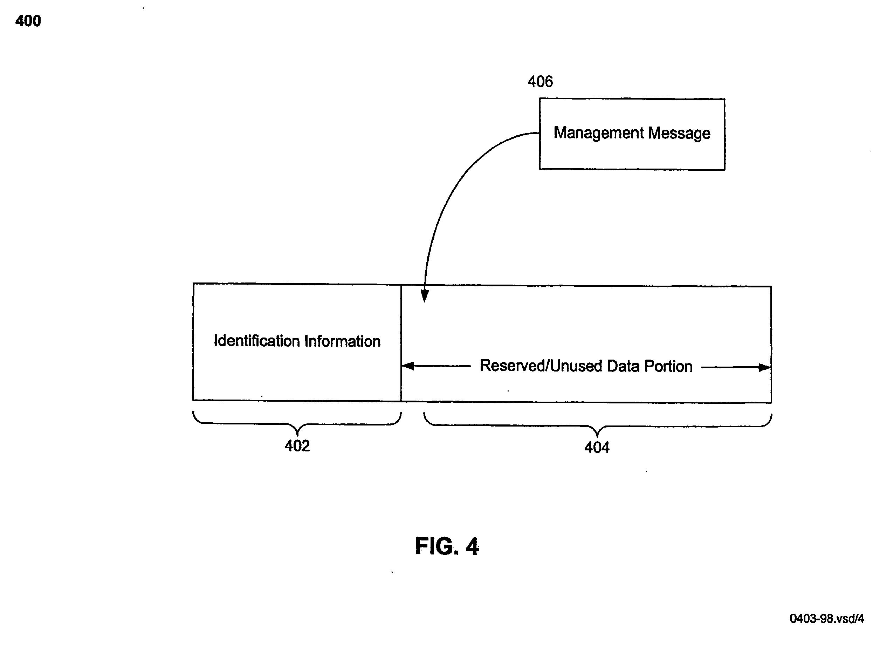

FIG. 4 illustrates a customized management message 400 formatted according to the predefined protocol. In accordance with the predefined protocol, the customized management message 400 contains a header 402 and a body 404. The header 402 of the customized management message 400 contains identification information. The identification information is used to notify the recipient that the customized management message 400 is a valid message and that the body 404 is reserved by the predefined protocol for customization. By definition, the body 404 is a reserved or unused portion of a reserved control word allocated by the predefined protocol for modification. Therefore, the body 404 of customized management message 400 can be adapted to contain a management command 406.

Management of the remote link partner 104 is obtained by the remote link partner 104 performing the management command 406 contained within the received customized management message 400. For example, the management command 406 can be a register access command such as a register read or write command. In response to an in-band management read instruction communicated by the link partner 102, the link partner 104 can execute the read instruction by responding back through the in-band management exchange with the results of the read request (i.e., the contents of a management register). The management command 406 can also include a deliberate error which can be used to initiate a test mode of the remote link partner 104. Further, to accommodate multiple-hop link partner systems or packet-based communication protocols, the customized management message 400 can contain forwarding instructions. In this way, the customized management message 400 can be passed from the local link partner 102 through an intermediate link partner to reach an intended remote link partner that executes the enclosed management command 406.

Adjusting the reserved control words of a predefined protocol to provide management register commands allows the local link partner 102 to provide interconnectivity information to the remote link partner 104. The modification of the reserved control words of the predefined protocol also enables the local link partner 102 to collect status information from the remote link partner 104. Such status information may include link integrity data, traffic flow counter data, or cyclic redundancy check counter data tracked and stored in the management registers of the remote link partner 104. Additionally, access to the management registers of the remote link partner 104 allows the local link partner 102 to control operations of the remote link partner 104. Specifically, the local link partner 102 can toggle the operational modes of the remote link partner 104, such as initiating a loop-back mode. Further, the local link partner can request that the remote link partner 104 send a test pattern in order to perform an analysis of the communication link 108. Fine-tuning adjustments, such as adjusting the equalization or pre-emphasis levels of the remote link 104, are also possible.

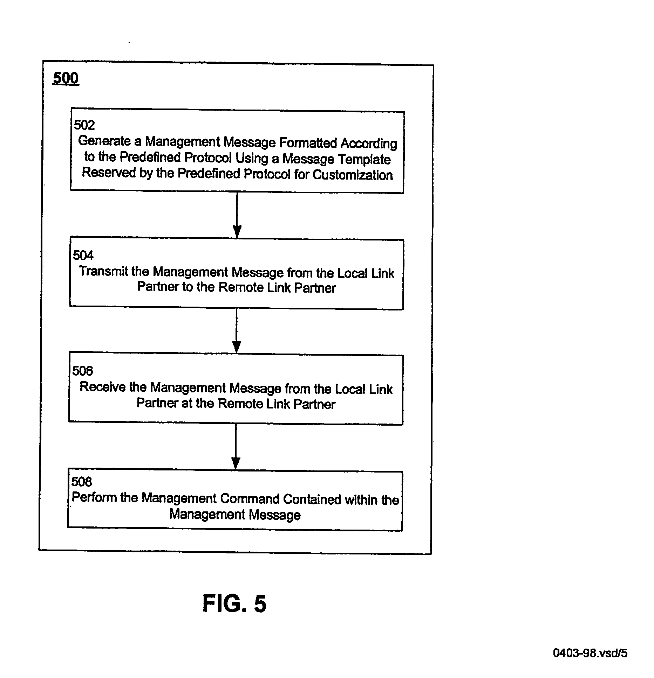

FIG. 5 provides a flowchart of a method 500 for the link partner 102 to obtain access to the management registers of the link partner 104. Beginning with step 502, the link partner 102 generates the customized management message 400 containing the management command 406 formatted according to the predefined protocol using a message template reserved by the predefined protocol for customization. The link partner 102 generates the management message 400 at the request of the network management system 106. At step 504, the link partner 102 transmits the customized management message 400 to the link partner 104. The link partner 102 can transmit the customized management message 400 when in an active mode or when in an idle mode, as defined by the predefined protocol. The link partner 104, as shown in step 506, receives the customized management message 400. At step 508, the link partner 104 performs the management command 406 contained within the customized management message 400. The management command 406 performed at step 508 can be, but is not limited to, a management register read or write. Execution of an in-band management read instruction communicated by the link partner 102 can include the link partner 104 responding back through the in-band management exchange mechanism with the results of the read request (i.e., the contents of a management register).

As an example of one embodiment of the present invention, register access management commands can be generated by modifying the sequence ordered sets defined by the IEEE 802.3ae protocol. Presently, the two defined sequence ordered sets of this protocol are:
(1) Local Fault
   ∥ LF∥ = /K28.4/D0.0/D0.0/D1.0/
(2) Remote Fault
   ∥ RF∥ = /K28.4/D0.0/D0.0/D2.0/
Using this template, other messages for issuing management commands can be defined to read or write to a PHY's management registers such as:
(a) Set Link Partner's Address
   ∥ SA∥ = /K28.4/ADh/AD1/D3.0/
   where ADh = upper 8 bits of the address and AD1 = lower 8 bits of the address
(b) Read Link Partner's Register
   ∥ RD∥ = /K28.4/ADh/AD1/D3.1/
   where ADh = upper 8 bits of the address and ADl = lower 8 bits of the address
(c) Write Link Partner's Register
   ∥ WR∥ = /K28.4/Dh/D1/D3.2/
   where Dh = upper 8 bits of the address and Dl = lower 8 bits of the address
(d) Acknowledge Receipt of Management Command
   ∥ AK1∥ = /K28.4/D0.0/D0.0/D3.3/
(e) Acknowledge Execution of Management Command
   ∥ AK1∥ = /K28.4/D0.0/D0.0/D3.4/
(f) Invalid Management Command
   ∥ AK1∥ = /K28.4/D0.0/D0.0/D3.5/

A sequence of management commands can be issued using the management messages defined above which are formatted according to the IEEE 802.3ae protocol and use the message template reserved for customization. Some examples include:
(a) Read a register
   (1) Issue "Set Link Partner's Address" with the desired address
   (2) Link partner replies with "Acknowledge Receipt of Management Command" or "Acknowledge Execution of Management Command"
   (3) Issue "Read Link Partner's Register"
   (4) Link partner replies with "Acknowledge Receipt of Management Command"
   (5) Link partner then responds with register contents
   Alternatively, steps 1-3 could be combined into one customized management function.
(b) Write to a register
   (1) Issue "Set Link Partner's Address" with the desired address
   (2) Link partner replies with "Acknowledge Receipt of Management Command" or "Acknowledge Execution of Management Command"
   (3) Issue "Write Link Partner's Register"
   (4) Link partner replies with "Acknowledge Receipt of Management Command" or "Invalid Management Command" if register is not available or writeable
   (5) Link partner responds with "Acknowledge Execution of Management Command"
Alternatively, steps 1-3 could be combined into one customized management function.

The example provided in relation to the IEEE 802.3ae protocol can be extended to other predefined communication protocols. The present invention is therefore not limited to the above described example but is instead directed to the use of any in-band signaling mechanism which conforms to a predefined protocol to enable access to a remote link partner's management registers.

### Conclusion

While various embodiments of the present invention have been described above, it should be understood that they have been presented by way of example and not limitation. It will be apparent to one skilled in the pertinent art that various changes in form and detail can be made therein without departing from the spirit and scope of the invention. Therefore, the present invention should only be defined in accordance with the following claims and their equivalents.

## Claims

1. In a communication network operating according to a predefined protocol, a method of accessing in-band a management register of a remote link partner, comprising:
generating a management message formatted according to the predefined protocol;
transmitting the management message in-band from a local link partner to the remote link partner; and
performing a management command communicated by the management message at the remote link partner.

2. The method of claim 1, wherein the performing step further comprises writing to the management register of the remote link partner.

3. The method of claim 1, wherein the performing step further comprises reading from the management register of the remote link partner.

4. The method of claim 3, wherein the performing step further comprises transmitting in-band contents of the management register from the remote link partner to the local link partner.

5. The method of claim 1, wherein the generating step further comprises generating the management message at the local link partner under the direction of a network management system.

6. A communication network operating according to a predefined protocol that provides in-band access to management registers, comprising:
a local link partner that generates and transmits in-band a management message formatted according to the predefined protocol; and
a remote link partner connected to the local link partner that receives the management message.

7. The communication network of claim 6, further comprising a network management system that instructs the local link partner to generate and transmit the management message.

8. The communication network of claim 6, wherein the local link partner transmits the management message when the local link partner is in an idle mode, as defined by the predefined protocol.

9. The communication network of claim 6, wherein the local link partner transmits the management message when the local link partner is in an active mode, as defined by the predefined protocol.

10. The communication network of claim 6, wherein the management message is generated according a message template reserved by the predefined protocol for customization.
